# FASCICULE DE BREVET EUROPEEN

(11) **EP 3 473 840 B1**
(45) Date de publication et mention de la délivrance du brevet: **05.05.2021**
(21) Numéro de dépôt: 18201933.1
(22) Date de dépôt: 23.10.2018
(51) Int. Cl.: F02D 41/02, F01N 3/36, F02D 41/14, F01N 9/00, F01N 13/00

(54) **PROCÉDÉ DE RÉGÉNÉRATION D'UN FILTRE À PARTICULES ET DISPOSITIF DE MISE EN OEUVRE**
VERFAHREN ZUR WIEDERAUFBEREITUNG EINES PARTIKELFILTERS, UND VORRICHTUNG ZUR UMSETZUNG DIESES VERFAHRENS
METHOD FOR REGENERATING A PARTICLE FILTER AND IMPLEMENTING DEVICE

(43) Date de publication de la demande: 24.04.2019
(73) Titulaire: RENAULT s.a.s., 92100 Boulogne-Billancourt (FR)
(72) Inventeur: FASOLO, Bertrand, 92160 Antony (FR)

(56) Documents cités:
- EP-A1- 2 063 090
- WO-A1-2010/130909
- US-A1- 2009 217 649
- US-A1- 2011 072 784
- US-A1- 2012 031 076
- US-A1- 2012 260 631

## Description

La présente invention se rapporte à un procédé de régénération d'un filtre à particules d'un moteur réglable à combustion interne et à allumage commandé pour véhicule automobile, et à un dispositif permettant de mettre en œuvre ledit procédé.

Tout comme les moteurs à allumage par compression, du type diesel, les moteurs à allumage commandé, notamment du type fonctionnant à l'essence, tendent de plus en plus à être équipés de filtres à particules.

Les filtres à particules des moteurs à allumage commandé, usuellement dénommés GPF, sigle de « *Gasoline Particulate Filter* » en langue anglaise, filtrent, c'est-à-dire retiennent et stockent ainsi les particules des gaz d'échappement produits par ces moteurs, plus précisément les particules des gaz de combustion émis à la sortie de la culasse du moteur. De ce fait, il est nécessaire de procéder à la régénération de ces filtres régulièrement, lorsqu'elle ne s'opère pas de manière spontanée, c'est-à-dire de manière passive, sous certaines conditions de roulage du véhicule. Pour ce faire, on détermine aisément la quantité de particules stockées dans le filtre, par exemple à partir d'une mesure de débit des gaz et de la dépression aux bornes du filtre, et, lorsque cette quantité dépasse un certain seuil, la régénération du filtre est provoquée. Ce processus de régénération, dite régénération active, consiste à forcer la combustion des particules en apportant un surplus d'oxygène au filtre. Aussi, on provoque une modification du réglage du moteur, tant au niveau du mélange comburant/carburant qu'au niveau du régime, par rapport au réglage courant du moteur qui est généralement réalisé à richesse 1, c'est-à-dire avec un mélange d'air et de carburant dont les proportions sont stœchiométriques.

Aussi, lors de la régénération active, le mélange de gaz d'échappement et d'air chargé en oxygène est dit, pauvre, de manière à pouvoir apporter le surplus d'oxygène dans le filtre à particules pour qu'il puisse y brûler les particules de suies accumulées pendant le fonctionnement normal du moteur à richesse 1.

Toutefois, ce surplus d'oxygène provoque de manière connue en soi, à la fois une augmentation de l'émission des oxydes d'azote, communément dénommés NOₓ de leur structure moléculaire, dans les gaz de combustion du moteur et au surplus, une inhibition du convertisseur catalytique, ou catalyseur trois voies, équipant de manière classique le moteur et qui est notamment censé réduire ces oxydes d'azote ; ce convertisseur catalytique fonctionnant alors en dehors de sa fenêtre catalytique. On peut alors multiplier par plus de trente les émissions d'oxydes d'azote du véhicule durant le processus de régénération.

Dans les conditions normales de roulage du véhicule, à vitesse soutenue et constante, la production d'oxydes d'azote durant les quelques minutes de la régénération ne soulève aucune difficulté, notamment parce que les conditions thermiques de fonctionnement du véhicule sont adaptées et que les oxydes d'azote sont dilués dans une grande quantité d'air.

Cependant, le seuil de quantité de particules stockées dans le filtre est rapidement atteint dans les cas où le véhicule effectue de petits trajets et où la température ambiante est faible. Dans ces cas, les conditions thermiques de régénération ne sont jamais réunies même si on essaye de la provoquer par un basculement du réglage du moteur en mélange pauvre, et il y a alors un risque de colmatage du filtre, et partant, un risque de dépassement dudit seuil et d'emballement de la réaction lorsque la régénération est finalement provoquée avec succès.

Aussi, un témoin lumineux indique au conducteur qu'une opération de maintenance du filtre à particules doit être opérée.

Cependant, cette opération de maintenance est effectuée quand le véhicule est à l'arrêt, selon le processus de régénération décrit ci-dessus. Et conséquemment, elle provoque une production locale importante d'oxydes d'azote nuisible pour la santé des personnels de maintenance. [A]

Aussi, un problème qui se pose et que vise à résoudre la présente invention est de fournir un procédé et un dispositif permettant la régénération du filtre à particules sans pour autant polluer localement l'atmosphère.

A : Le document US2012260631 divulgue un moteur comportant deux groupes de cylindre réglés différemment pour régénérer un filtre à particules et moins polluer l'atmosphère.

Dans ce but, et selon un premier objet, il est proposé un procédé de régénération d'un filtre à particules d'un moteur réglable à combustion interne et à allumage commandé pour véhicule, selon la revendication 1. Le réglage du moteur réglable de façon à ce que les gaz d'échappement contiennent de l'oxygène en surplus, est dit : « en mélange pauvre».

Ainsi, une caractéristique de l'invention réside dans la mise en œuvre d'un convertisseur catalytique en aval du filtre à particules et à l'introduction de carburant dans les gaz d'échappement entre le filtre à particules et le convertisseur catalytique de manière à pouvoir rétablir la stœchiométrie du mélange réactionnel vis-à-vis de la réduction des oxydes d'azote à l'entrée dudit convertisseur catalytique. Autrement dit, l'introduction de carburant dans les gaz échappement contenant des oxydes d'azote, rend le milieu plus réducteur et par conséquent, propice à la réduction des oxydes d'azote.

En effet, durant la phase de régénération du filtre à particules, le moteur est réglé de manière à ce que le mélange combustible/oxygène soit en excès d'oxygène pour permettre l'oxydation des particules du filtre. Le mélange s'écarte alors de la stoechiométrie et il est qualifié de pauvre. Le catalyseur trois voies du moteur situé en amont du filtre à particules, est alors inefficace pour réduire les oxydes d'azote, lesquels traversent le filtre à particules avec les gaz échappement. C'est donc à la sortie du filtre à particules que l'on vient enrichir les gaz échappement en les mélangeant à un carburant puis en guidant le mélange réactionnel à travers un convertisseur catalytique qui se présente sous la forme d'un second catalyseur trois voies.

Préférentiellement, on enregistre la concentration en oxygène dudit mélange réactionnel ayant traversé ledit convertisseur catalytique. En effet, si les gaz échappement en sortie du convertisseur catalytique contiennent encore de l'oxygène, on peut supposer qu'ils contiennent également des oxydes d'azote. Aussi, selon une caractéristique de l'invention particulièrement avantageuse, on mélange avec lesdits gaz d'échappement ayant traversés ledit filtre à particules et contenant les oxydes d'azote, une quantité de carburant qui est une fonction de la concentration en oxygène enregistrée. De la sorte, on augmente la quantité de carburant mélangée avec les gaz d'échappement jusqu'à obtenir une valeur sensiblement nulle de la concentration en oxygène des gaz d'échappement s'échappant du convertisseur catalytique. On est alors certain que dans ces conditions, plus de 95 % des oxydes d'azote ont été réduits et transformés notamment en diazote.

Selon un mode préféré de mise en œuvre de l'invention, on injecte ledit carburant dans lesdits gaz d'échappement pour mélanger lesdits gaz d'échappement et ledit carburant. Ainsi, en injectant le carburant on le répand en fines gouttelettes à travers les gaz d'échappement de manière homogène et dispersée. De la sorte, la réduction des oxydes d'azote au contact du convertisseur catalytique est plus aisée.

Aussi, et selon un autre mode préféré de mise en œuvre de l'invention, on mélange lesdits gaz d'échappement ayant traversés ledit filtre à particules et contenant les oxydes d'azote avec de l'essence. De la sorte, on met en œuvre comme carburant de l'essence, usuellement utilisée dans les moteurs à combustion interne. Il est possible de mettre en œuvre l'essence du réservoir du moteur à combustion interne ou bien celle d'un réservoir externe comme on l'expliquera ci-après.

Selon un autre aspect, il est proposé un dispositif adapté au procédé de régénération décrit ci-dessus et conformément à la revendication 6.

Le dispositif est avantageusement indépendant du véhicule et il est raccordé au conduit d'échappement sous caisse lors de l'opération de maintenance du filtre à particules. Il peut être raccordé à l'extrémité terminale du conduit l'échappement ou bien être interposé, par exemple entre le silencieux et le filtre à particules.

Selon un mode préféré de mise en œuvre du dispositif, il comprend en outre une sonde à oxygène pour enregistrer la concentration en oxygène dudit mélange réactionnel ayant traversé ledit convertisseur catalytique. La concentration en oxygène est un paramètre important à contrôler, car elle conditionne la présence ou non d'oxydes d'azote.

Aussi, le dispositif comprend une pompe reliée à ladite sonde à oxygène pour mélanger avec lesdits gaz d'échappement ayant traversé ledit filtre à particules et contenant les oxydes d'azote, une quantité de carburant qui est une fonction de la concentration en oxygène enregistrée. De la sorte, lorsque la sonde à oxygène enregistre la présence d'oxygène dans les gaz d'échappement, la durée d'injection du carburant est augmentée de manière à rendre le milieu plus réducteur car, en toute hypothèse, les oxydes d'azote sont présents dans les gaz d'échappement s'échappant en aval du convertisseur catalytique.

Préférentiellement, le dispositif comprend un calculateur relié à ladite sonde et à ladite pompe. Ainsi, le calculateur permet de calculer la quantité de carburant nécessaire à introduire dans les gaz d'échappement afin de réduire plus de 95 % des oxydes d'azote au niveau du convertisseur catalytique. Aussi, le dispositif comprend un injecteur relié audit réservoir de carburant pour injecter ledit carburant dans lesdits gaz d'échappement. L'injecteur, directement relié à la pompe, laquelle pompe fonctionne à basse pression, par exemple 3,5 bar, permet de disperser le carburant dans les gaz échappement en très fines gouttelettes pour améliorer le rendement de la réaction de réduction des oxydes d'azote. Préférentiellement, une turbine de mélange est installée en aval de l'injecteur afin de disperser plus encore le carburant dans les gaz échappement.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique d'un moteur réglable à combustion interne et à allumage commandé prolongé par sa ligne d'échappement ;
- la Figure 2 est une vue schématique partielle du dispositif conforme à l'invention raccordé, selon un premier mode de mise en œuvre, à la ligne d'échappement illustrée sur la Figure 1 ;
- la Figure 3 une vue schématique partielle du dispositif conforme à l'invention raccordé, selon un second mode de mise en œuvre, à la ligne d'échappement illustrée sur la Figure 1 ; et,
- la Figure 4 est un organigramme illustrant le procédé de régénération d'un filtre à particules selon l'invention.

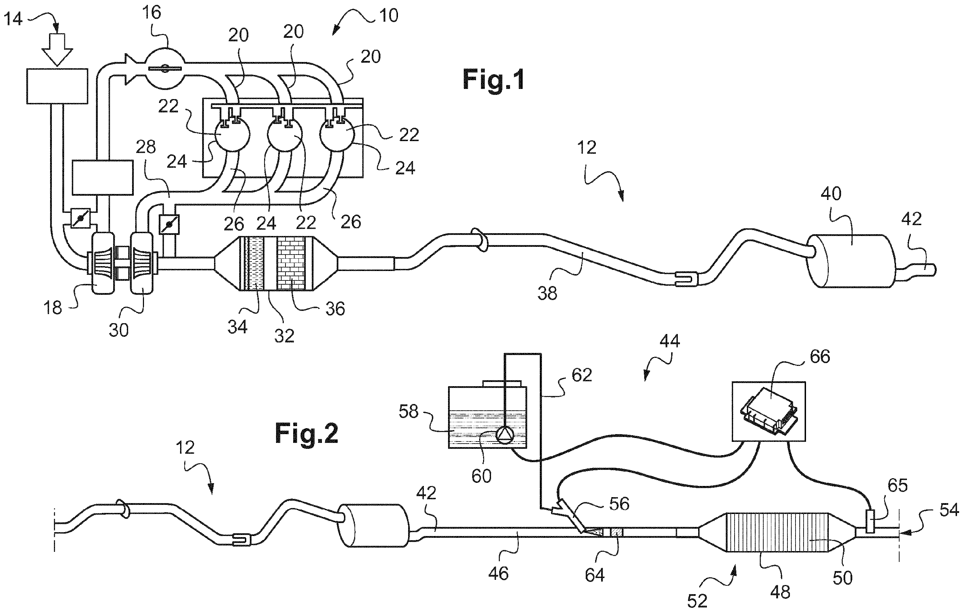

La Figure 1 illustre un moteur réglable à combustion interne et à allumage commandé 10 adapté à être installé sur un véhicule automobile. Il est prolongé par une ligne d'échappement 12 des gaz d'échappement, plus précisément des gaz de combustion produits par le moteur 10. Le moteur réglable à allumage commandé 10 présente une entrée d'air frais 14 et une entrée de carburant réglable 16, et en l'espèce d'essence, permettant d'adapter le couple du moteur. Sur la Figure 1 on a représenté de manière non limitative un moteur qui est du type suralimenté. L'air frais est alors aspiré par un compresseur 18 pour pouvoir être refoulé vers l'entrée de carburant 16 puis vers des pipes d'admission 20 débouchant dans les chambres de combustion 22 des cylindres 24. Des pipes d'échappement 26 correspondantes, pour chacun des cylindres 24 convergent vers un conduit d'échappement 28. Le conduit d'échappement rejoint une turbine 30 apte à entraîner en rotation le compresseur 18, puis il débouche dans un dispositif de dépollution 32 des gaz de combustion du moteur, par exemple en forme de caisson biconique comportant en série, un convertisseur catalytique 34 du type catalyseur trois voies, dit également TWC pour : «*Three Way Catalyst* », suivi d'un filtre à particules 36, dit aussi de type GPF pour : « *Gazoline Particulate Filter* ».

Le dispositif de dépollution 32 se prolongent alors par la ligne d'échappement 12, laquelle présente une partie intermédiaire amovible 38 et à l'extrémité un silencieux 40 prolongé à son tour par une canule d'échappement 42.

Dans une telle configuration, lorsqu'il s'agit de procéder à la régénération du filtre à particules 36, dans le cadre d'une opération de maintenance où le véhicule est immobilisé, on procède d'abord à la mise en route du moteur. Puis il est réglé de manière automatique par un calculateur du moteur, d'une part pour que le mélange comburant/carburant soit pauvre, c'est-à-dire en surplus d'oxygène, et d'autre part que le régime moteur permette au filtre à particules 36 d'atteindre une température donnée et de se maintenir à cette température. Grâce à ce surplus d'oxygène, qui est entraîné par les gaz échappement à travers le filtre à particules 36, et à la température, les particules faites essentiellement de composés carbonés, sont alors brûlées.

La difficulté est que le surplus d'oxygène provoque non seulement une inhibition du catalyseur trois voies 34 qui ne réduit alors plus les oxydes d'azote, mais aussi, génère d'autres molécules d'oxyde d'azote, ce qui démultiplie leur concentration.

Ainsi, un objet de l'invention est de mettre en œuvre, en aval du filtre à particules 36, un dispositif adapté permettant de mettre en œuvre la régénération du filtre à particules 36 sans pour autant rejeter dans l'atmosphère des oxydes d'azote.

Pour ce faire, et selon une première variante de réalisation illustrée sur la Figure 2, on vient ajuster un dispositif de traitement 44 directement en prise sur la canule d'échappement 42. Selon cette variante de réalisation, le dispositif de traitement 44 est indépendant du véhicule automobile et il peut être stocké, par exemple dans les garages automobiles chargés des opérations de maintenance. Le dispositif de traitement 44 peut par exemple être installé sur un chariot mobile autonome.

Le dispositif de traitement 44 comporte un conduit principal 46 qui en l'espèce est installé dans le prolongement de la canule d'échappement 42 en aval du filtre à particules. Ce conduit principal 46 présente un élargissement biconique 48 contenant un catalyseur 50 de type catalyseur trois voies, ou TWC, formant alors un second convertisseur catalytique 52. Et il se prolonge par une sortie 54. En amont de l'élargissement biconique 48, un injecteur d'essence 56 est installé à l'intérieur du conduit principal 46. Le dispositif de traitement 44 comprend en outre un réservoir d'essence 58 et une pompe basse pression 60, de l'ordre de 3,5 bar, installée à l'intérieur du réservoir d'essence 58 et reliée à l'injecteur d'essence 56 par le biais d'un conduit d'alimentation 62. Par ailleurs, le conduit principal 46 est équipé, à l'intérieur, d'un système à aubes 64 situé en aval de l'injecteur 56 pour permettre une meilleure dispersion de l'essence comme on l'expliquera ci-après. Le dispositif de traitement 44 comporte également une sonde à oxygène 65 située à l'intérieur du conduit principal 46 en aval du convertisseur catalytique 52. Aussi, le dispositif de traitement 44 est contrôlé par un calculateur 66 relié à la fois à la pompe 60, à l'injecteur d'essence 56 et à la sonde à oxygène 65.

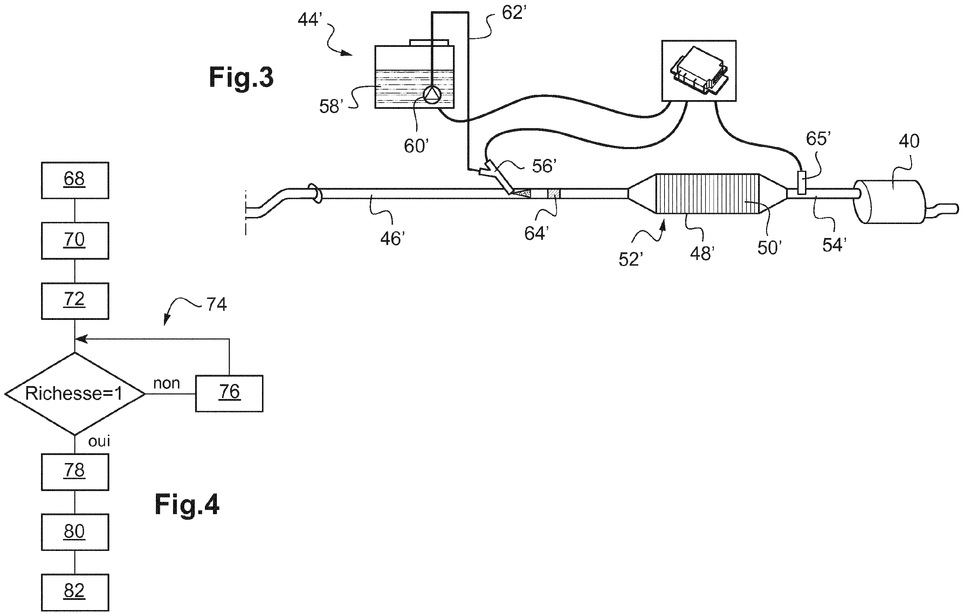

On se reportera à présent à l'organigramme de la Figure 4 pour décrire le procédé de régénération selon l'invention.

Ainsi, et selon une première étape 68 du procédé de régénération du filtre à particules 36 illustré sur la Figure 1, on raccorde, véhicule et moteur à l'arrêt, le conduit principal 46 à la canule d'échappement 42. Dans une deuxième étape 70, le moteur 10 est démarré, tandis que le programme de régénération du filtre à particules 36 est engagé. Ainsi, le calculateur propre du moteur veille à porter le régime du moteur à un niveau permettant au filtre à particules 36 d'atteindre une température déterminée et en outre, il autorise l'entrée d'un surplus d'air dans le moteur afin d'augmenter la concentration en oxygène des gaz échappement. La richesse des gaz échappement est alors, non plus égale à l'unité, 1, comme cela est le cas en régime normal de roulage du véhicule, mais à une valeur de l'ordre de 0,9 environ où la production d'oxydes d'azote est maximale, tandis que le catalyseur 34 est inefficient.

Dès après la mise en œuvre de la deuxième étape 70, selon une troisième étape 72, le dispositif de traitement 44 est activé. Les gaz d'échappement chargés en oxydes d'azote qui s'écoulent alors à l'intérieur de la ligne d'échappement 12 traversent le conduit principal 46 et le catalyseur 50, ou second convertisseur catalytique, jusqu'à la sortie 54, tandis que la sonde à oxygène 65 enregistre une valeur représentative de la teneur en oxygène des gaz échappement.

Aussi, on considère que, tant que de l'oxygène est détecté par la sonde à oxygène 65 en aval du catalyseur 48, la richesse des gaz d'échappement n'est pas revenue à la richesse stœchiométrique soit à la richesse 1.

Dès après la troisième étape 72, le calculateur 66 du dispositif, entre dans une boucle de contrôle 74 dans laquelle le calculateur 66 commande la pompe basse pression 60, selon une étape 76, pour pouvoir injecter de l'essence dans les gaz d'échappement par le biais de l'injecteur 56. Aussi, tant que la teneur en oxygène des gaz d'échappement détectée par la sonde à oxygène 65 n'est pas voisine de zéro, autrement dit que la richesse des gaz échappement n'est pas revenue à l'unité, ou richesse stœchiométrique, le débit de la pompe basse pression 60 est augmenté. On observera que le système à aubes 64 permet d'améliorer la dispersion de l'essence dans les gaz d'échappement.

Lorsque la sonde à oxygène 65 ne détecte plus d'oxygène, la pompe basse pression 60 est portée à un régime stationnaire selon une cinquième étape 78.

Bien entendu, la vitesse de réglage de la pompe 60 est très rapide de manière à ce que très peu d'oxydes d'azote ne s'échappent de la sortie 54. Selon un mode préféré de mise en œuvre, la pompe 60 est démarrée dès l'activation du dispositif de traitement 44 de telle sorte que le calculateur, permet d'ajuster plus finement la quantité d'essence à injecter dans les gaz d'échappement pour obtenir une richesse du mélange gaz échappement/essence égale à l'unité.

Durant toute la phase de régénération du filtre à particules 36, les oxydes d'azote produits vont donc être réduits grâce au catalyseur trois voies 50 du dispositif de traitement 44, qui, quant à lui n'est pas inhibé.

Selon une sixième étape 80, le programme de régénération du filtre à particules 36 est stoppé, tandis que le dispositif de traitement 44 est lui désactivé. Selon une septième étape 82, le dispositif de traitement 44 est désolidarisé de la canule d'échappement 42. Le dispositif de traitement 44, monté sur un chariot mobile, est alors aisément stocké, tandis que le véhicule automobile présente un filtre à particules débarrassé précisément de ses particules.

Selon un autre mode de mise en œuvre de l'invention représenté sur la Figure 3, le dispositif de traitement 44' est installé sur le véhicule automobile au niveau de la ligne d'échappement entre le silencieux 40 et le caisson biconique 32 incluant le filtre à particules 36, en remplacement de la partie intermédiaire amovible 38. Les références du dispositif de traitement 44' sont affectées d'un signe prime : «'», car, bien qu'il présente les mêmes constituants assurant les mêmes fonctions, il est adapté pour être installé sous le véhicule automobile, le conduit principal 46' venant se substituer à une portion de la ligne d'échappement 12.

Tout comme pour le précédent mode de mise en œuvre, le dispositif de traitement 44' présente un élargissement biconique 48' contenant un catalyseur trois voies 50', formant un second convertisseur catalytique 52'. Et il se prolonge par une sortie 54' raccordée au silencieux 40. En amont de l'élargissement biconique 48', un injecteur d'essence 56' est installé. Le dispositif de traitement 44' comprend en outre un réservoir d'essence 58' et une pompe basse pression 60' reliée à l'injecteur d'essence 56' par le biais d'un conduit d'alimentation 62'. Aussi, le conduit principal 46' est équipé, à l'intérieur, d'un système à aubes 64' situé en aval de l'injecteur 56'. Le dispositif de traitement 44' comporte une sonde à oxygène 65' située à l'intérieur du conduit principal 46' en aval du convertisseur catalytique 52'. Et il est contrôlé par un calculateur 66' relié à la fois à la pompe 60', à l'injecteur d'essence 56' et à la sonde à oxygène 65'.

Le procédé de mise en œuvre est alors totalement analogue au précédent.

## Revendications

1. Procédé de régénération d'un filtre à particules (36) d'un moteur réglable à combustion interne et à allumage commandé (10) pour véhicule, ledit moteur réglable produisant des gaz d'échappement chargés en particules, tandis que ledit filtre à particules (36) filtre lesdites particules, ledit procédé de régénération comprenant les étapes suivantes :
- on règle ledit moteur réglable (10) de façon à ce que les gaz d'échappement contiennent de l'oxygène en surplus, tandis que lesdits gaz d'échappement contiennent en outre des oxydes d'azote ;
- on guide lesdits gaz d'échappement contenant de l'oxygène et lesdits oxydes d'azote à travers ledit filtre à particules (36) de façon que l'oxygène provoque la combustion desdites particules filtrées ;
**caractérisé en ce qu'**il comprend en outre les étapes suivantes :
- on installe un convertisseur catalytique (52 ; 52') en aval du filtre à particules (36) et un injecteur (56 ; 56') en aval du filtre à particules (36) ;
- on injecte un carburant dans lesdits gaz d'échappement ayant traversés ledit filtre à particules (36) et contenant les oxydes d'azote pour mélanger lesdits gaz d'échappement et ledit carburant et obtenir un mélange réactionnel voisin de la stœchiométrie pour la réaction de réduction desdits oxydes d'azote ; et,
- on guide ledit mélange réactionnel à travers ledit convertisseur catalytique de manière à réduire lesdits oxydes d'azote.

2. Procédé de régénération selon la revendication 1, **caractérisé en ce qu'**on enregistre la concentration en oxygène dudit mélange réactionnel ayant traversé ledit convertisseur catalytique (52 ; 52').

3. Procédé de régénération selon la revendication 2, **caractérisé en ce qu'**on mélange avec lesdits gaz d'échappement ayant traversés ledit filtre à particules (36) et contenant les oxydes d'azote, une quantité de carburant qui est une fonction de la concentration en oxygène enregistrée.

4. Procédé de régénération selon la revendication 3, **caractérisé en ce qu'**on on augmente la quantité de carburant mélangée avec les gaz d'échappement jusqu'à obtenir une valeur sensiblement nulle de la concentration en oxygène des gaz d'échappement s'échappant du convertisseur catalytique.

5. Procédé de régénération selon l'une quelconque des revendications 1 à 4, **caractérisé en ce qu'**on on mélange lesdits gaz d'échappement ayant traversés ledit filtre à particules (36) et contenant les oxydes d'azote avec de l'essence.

6. Dispositif (44 ; 44') pour la régénération d'un filtre à particules (36) d'un moteur réglable à combustion interne et à allumage commandé (10) de véhicule, ledit moteur réglable produisant des gaz d'échappement chargés en particules, tandis que ledit filtre à particules (36) filtre lesdites particules, ledit moteur réglable (10) comprenant, d'une part des organes de réglage pour régler ledit moteur réglable de façon à ce que les gaz d'échappement contiennent de l'oxygène en surplus, tandis que lesdits gaz d'échappement contiennent en outre des oxydes d'azote, et d'autre part des organes de guidage pour guider lesdits gaz d'échappement contenant de l'oxygène et lesdits oxydes d'azote à travers ledit filtre à particules (36) de façon que l'oxygène provoque la combustion desdites particules filtrées ;
**caractérisé en ce qu'**il comprend en outre :
- un réservoir de carburant (58 ; 58') et un injecteur (56 ; 56') installé en aval du filtre à particules (36) et relié audit réservoir de carburant (58 ; 58') pour injecter ledit carburant dans lesdits gaz d'échappement et mélanger lesdits gaz d'échappement ayant traversés ledit filtre à particules (36) et contenant les oxydes d'azote avec le carburant pour obtenir un mélange réactionnel voisin de la stœchiométrie pour la réaction de réduction desdits oxydes d'azote ; et,
- un convertisseur catalytique (52 ; 52') et un conduit de guidage pour pouvoir guider ledit mélange réactionnel à travers ledit convertisseur catalytique de manière à réduire lesdits oxydes d'azote.

7. Dispositif selon la revendication 6, **caractérisé en ce qu'**il comprend en outre une sonde à oxygène (65 ; 65') pour enregistrer la concentration en oxygène dudit mélange réactionnel ayant traversé ledit convertisseur catalytique (52 ; 52').

8. Dispositif selon la revendication 7, **caractérisé en ce qu'**il comprend une pompe (60 ; 60') reliée à ladite sonde à oxygène (65 ; 65') pour mélanger avec lesdits gaz d'échappement ayant traversé ledit filtre à particules (36) et contenant les oxydes d'azote, une quantité de carburant fonction de la concentration en oxygène enregistrée.

9. Dispositif selon les revendications 7 et 8, **caractérisé en ce qu'**il comprend un calculateur (66 ; 66') relié à ladite sonde (65 ; 65') et à ladite pompe (60 ; 60').

## Patentansprüche

1. Verfahren zur Regeneration eines Partikelfilters (36) eines regelbaren Verbrennungsmotors mit Fremdzündung (10) für ein Fahrzeug, wobei der regelbare Motor partikelbeladene Abgase erzeugt, während der Partikelfilter (36) die Partikel herausfiltert, wobei das Regenerationsverfahren folgende Schritte umfasst:
- der regelbare Motor (10) wird derart geregelt, dass die Abgase einen Überschuss an Sauerstoff enthalten, während die Abgase ferner Stickoxide enthalten;
- die Abgase, die den Sauerstoff und die Stickoxide enthalten, werden derart durch den Partikelfilter (36) geleitet, dass der Sauerstoff die Verbrennung der herausgefilterten Partikel bewirkt;
**dadurch gekennzeichnet, dass** es ferner folgende Schritte umfasst:
- es wird ein Katalysator (52; 52') in Strömungsrichtung hinter dem Partikelfilter (36) und eine Düse (56; 56') in Strömungsrichtung hinter dem Partikelfilter (36) eingebaut;
- Kraftstoff wird in die Abgase eingespritzt, die durch den Partikelfilter (36) geströmt sind und die Stickoxide enthalten, damit die Abgase und der Kraftstoff gemischt werden und ein beinahe stöchiometrisches Reaktionsgemisch für die Reduktionsreaktion der Stickoxide erhalten wird, und
- das Reaktionsgemisch wird durch den Katalysator geleitet, damit die Stickoxide reduziert werden.

2. Regenerationsverfahren nach Anspruch 1, **dadurch gekennzeichnet, dass** die Sauerstoffkonzentration des Reaktionsgemischs, das durch den Katalysator (52; 52') geströmt ist, aufgezeichnet wird.

3. Regenerationsverfahren nach Anspruch 2, **dadurch gekennzeichnet, dass** die Abgase, die durch den Partikelfilter (36) geströmt sind und die Stickoxide enthalten, mit einer Kraftstoffmenge gemischt werden, die von der aufgezeichneten Sauerstoffkonzentration abhängt.

4. Regenerationsverfahren nach Anspruch 3, **dadurch gekennzeichnet, dass** die mit den Abgasen gemischte Kraftstoffmenge erhöht wird, bis ein Wert der Sauerstoffkonzentration der aus dem Katalysator ausströmenden Abgase von im Wesentlichen null erreicht ist.

5. Regenerationsverfahren nach einem der Ansprüche 1 bis 4, **dadurch gekennzeichnet, dass** die Abgase, die durch den Partikelfilter (36) geströmt sind und die Stickoxide enthalten, mit Benzin gemischt werden.

6. Vorrichtung (44; 44') zur Regeneration eines Partikelfilters (36) eines regelbaren Verbrennungsmotors mit Fremdzündung (10) für ein Fahrzeug, wobei der regelbare Motor partikelbeladene Abgase erzeugt, während der Partikelfilter (36) die Partikel herausfiltert, wobei der regelbare Motor (10) einerseits Regelglieder zum derartigen Regeln des regelbaren Motors umfasst, dass die Abgase Sauerstoff im Überschuss enthalten, während die Abgase ferner Stickoxide enthalten, und andererseits Leitglieder zum derartigen Leiten der Abgase, die Sauerstoff und die Stickoxide enthalten, durch den Partikelfilter (36), dass der Sauerstoff die Verbrennung der herausgefilterten Partikel bewirkt;
**dadurch gekennzeichnet, dass** sie ferner umfasst:
- einen Kraftstoffspeicherbehälter (58; 58') und eine Düse (56; 56'), die in Strömungsrichtung hinter dem Partikelfilter (36) eingebaut und mit dem Kraftstoffspeicherbehälter (58; 58') verbunden ist, damit sie den Kraftstoff in die Abgase einspritzt und die Abgase, die durch den Partikelfilter (36) geströmt sind und die Stickoxide enthalten, mit dem Kraftstoff mischt und so ein beinahe stöchiometrisches Reaktionsgemisch für die Reduktionsreaktion der Stickoxide erhalten wird, und
- einen Katalysator (52; 52') und einen Leitkanal, damit das Reaktionsgemisch durch den Katalysator geleitet werden kann, damit die Stickoxide reduziert werden.

7. Vorrichtung nach Anspruch 6, **dadurch gekennzeichnet, dass** sie ferner eine Sauerstoffsonde (65; 65') zum Aufzeichnen der Sauerstoffkonzentration des Reaktionsgemischs umfasst, das durch den Katalysator (52; 52') geströmt ist.

8. Vorrichtung nach Anspruch 7, **dadurch gekennzeichnet, dass** sie eine Pumpe (60; 60') umfasst, die mit der Sauerstoffsonde (65; 65') verbunden ist, damit sie eine Kraftstoffmenge in Abhängigkeit von der aufgezeichneten Sauerstoffkonzentration mit den Abgasen mischt, die durch den Partikelfilter (36) geströmt sind und die Stickoxide enthalten.

9. Vorrichtung nach Anspruch 7 und 8, **dadurch gekennzeichnet, dass** sie einen Rechner (66; 66') umfasst, der mit der Sonde (65; 65') und mit der Pumpe (60; 60') verbunden ist.

## Claims

1. Method for regenerating a particulate filter (36) of an adjustable controlled-ignition internal combustion engine (10) for a vehicle, said adjustable engine producing exhaust gases laden with particulates, whereas said particulate filter (36) filters said particulates, said regenerating method comprising the following steps:
- adjusting said adjustable engine (10) in such a way that the exhaust gases contain excess oxygen, while said exhaust gases additionally contain nitrogen oxides;
- guiding said exhaust gases containing oxygen and said nitrogen oxides through said particulate filter (36) in such a way that the oxygen causes the combustion of said filter particulates; **characterized in that** it additionally comprises the following steps:
- installing a catalytic converter (52; 52') downstream of the particulate filter (36) and an injector (56; 56') downstream of the particulate filter (36);
- injecting a fuel into said exhaust gases having passed through said particulate filter (36) and containing nitrogen oxides in order to mix said exhaust gases and said fuel and to obtain a near-stoichiometric reaction mixture for the reduction reaction of said nitrogen oxides; and
- guiding said reaction mixture through said catalytic converter so as to reduce said nitrogen oxides.

2. Regenerating method according to Claim 1, **characterized in that** the oxygen concentration of said reaction mixture having passed through said catalytic converter (52; 52') is recorded.

3. Regenerating method according to Claim 2, **characterized in that** a quantity of fuel which is a function of the recorded oxygen concentration is mixed with said exhaust gases having passed through said particulate filter (36) and containing the nitrogen oxides.

4. Regenerating method according to Claim 3, **characterized in that** the fuel quantity mixed with the exhaust gases is increased until obtaining a substantially zero value of the oxygen concentration of the exhaust gases escaping from the catalytic converter.

5. Regenerating method according to any one of Claims 1 to 4, **characterized in that** said exhaust gases having passed through said particulate filter (36) and containing the nitrogen oxides are mixed with petrol.

6. Device (44; 44') for the regeneration of a particulate filter (36) of an adjustable controlled-ignition internal combustion engine (10) of a vehicle, said adjustable engine producing exhaust gases laden with particles, whereas said particulate filter (36) filters said particles, said adjustable engine (10) comprising, on the one hand, adjustment members for adjusting said adjustable engine in such a way that the exhaust gases contain excess oxygen, while said exhaust gases additionally contain nitrogen oxides, and, on the other hand, guide members for guiding said exhaust gases containing oxygen and said nitrogen oxides through said particulate filter (36) in such a way that the oxygen causes the combustion of said filter particulates;
**characterized in that** it additionally comprises:
- a fuel reservoir (58; 58') and an injector (56; 56') installed downstream of the particulate filter (36) and connected to said fuel reservoir (58; 58') in order to inject said fuel into said exhaust gases and to mix said exhaust gases having passed through said particulate filter (36) and containing the nitrogen oxides with the fuel in order to obtain a near-stoichiometric reaction mixture for the reduction reaction of said nitrogen oxides; and
- a catalytic converter (52; 52') and a guide duct in order to be able to guide said reaction mixture through said catalytic converter so as to reduce said nitrogen oxides.

7. Device according to Claim 6, **characterized in that** it additionally comprises an oxygen sensor (65; 65') for recording the oxygen concentration of said reaction mixture having passed through said catalytic converter (52; 52').

8. Device according to Claim 7, **characterized in that** it comprises a pump (60; 60') connected to said oxygen sensor (65; 65') for mixing a quantity of fuel which is a function of the recorded oxygen concentration with said exhaust gases having passed through said particulate filter (36) and containing the nitrogen oxides.

9. Device according to Claims 7 and 8, **characterized in that** it comprises a computer (66; 66') connected to said sensor (65; 65') and to said pump (60; 60').
